## Europäisches Patentamt

## European Patent Office

## Office européen des brevets

(11) Veröffentlichungsnummer: **0 066 238**
**B1**

(12) **EUROPÄISCHE PATENTSCHRIFT**

(45) Veröffentlichungstag der Patentschrift:
**17.04.85**

(21) Anmeldenummer: **82104555.6**

(22) Anmeldetag: **25.05.82**

(51) Int. Cl.⁴: **A 01 D 46/08,** A 01 D 45/00

(54) **Erntemaschine zum Ernten von in Reihen stehendem Erntegut.**

(30) Priorität: **26.05.81 US 266876**

(43) Veröffentlichungstag der Anmeldung:
**08.12.82 Patentblatt 82/49**

(45) Bekanntmachung des Hinweises auf die Patenterteilung:
**17.04.85 Patentblatt 85/16**

(84) Benannte Vertragsstaaten:
**DE FR GB IT**

(56) Entgegenhaltungen:
**US - A - 2 869 306**
**US - A - 3 162 989**
**US - A - 3 314 221**
**US - A - 3 372 536**
**US - A - 3 416 296**
**US - A - 3 631 660**

(73) Patentinhaber: **DEERE & COMPANY, 1 John Deere Road, Moline Illinois 61265 (US)**

(72) Erfinder: **Copley, Russel Dean, 1105 Northwest Third Street, Ankeny Iowa 50021 (US)**
Erfinder: **Schlueter, Francis Edward, 6666 Northwest Fifth Street, Des Moines Iowa 50313 (US)**

(74) Vertreter: **Fricke, Joachim, Dr., Dr. R. Döring, Dr. J. Fricke, Patentanwälte Josephspitalstrasse 7, D-8000 München 2 (DE)**

Anmerkung· Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Die Erfindung betrifft eine Erntemaschine zum Ernten von in Reihen stehendem Erntegut, insbesondere Baumwolle, bestehend aus einer selbstfahrenden Antriebseinheit, insbesondere Ackerschlepper mit angetriebenen Hinterrädern, der bei seinem Einsatz in normaler Fahrtrichtung entlang der Pflanzenreihe fährt, aus einer hinter der Achse der Hinterräder der Antriebseinheit angeordneten, an der Antriebseinheit lösbar befestigten Trageinrichtung für eine Reihenernteeinheit mit auf die Hinterachse der Antriebseinheit zu gerichtetem Arbeitsdurchgang für die Pflanzen und aus einer in Fahrtrichtung vor der Trageinrichtung angeordneten, an der Antriebseinheit lösbar befestigten Erntegutsammeleinrichtung.

Eine solche Erntemaschine ist aus der US-A-2 869 306 bekannt. Während bei vielen Baumwollpflückmaschinen die Ackerschlepper od. dgl. Antriebseinheiten entgegen ihrer normalen Fahrtrichtung rückwärts über die Baumwollpflanzreihen hinwegfahren müssen (vgl. US-A-3 416 296) fährt bei der Erntemaschine nach der US-A-2 869 306 der Ackerschlepper in seiner normalen Fahrtrichtung durch die Reihen. Bei dieser bekannten Erntemaschine ist nur eine einzige Reihenernteeinheit anbringbar, die im Bereich zwischen den Laufrädern des Ackerschleppers wirksam ist. Eine Verstellung der Seite nach ist praktisch nicht möglich. Die Trageinrichtung für die einzige Reihenernteeinheit liegt im Bereich zwischen der Reihenernteeinheit und der Hinterradachse des Ackerschleppers und ist mit der normalen Hubeinrichtung des Ackerschleppers verbunden.

Demgegenüber ist es Aufgabe der Erfindung, eine Erntemaschine mit den Merkmalen des Oberbegriffs des Anspruchs 1 so weiterzubilden, daß die Erntekapazität der Maschine über zwei Pflanzreihen hinaus vergrößert werden kann, ohne daß die Reihenernteeinheiten den Bodenstreifen zwischen den Laufrädern des Ackerschleppers zugeordnet werden müssen, wobei eine unbehinderte, freie Ausrichtung der Reihenernteeinheit auf die Pflanzenreihen auch bei unterschiedlichem Reihenabstand auf einfache Weise ermöglicht werden soll.

Diese Aufgabe wird erfindungsgemäß dadurch gelöst, daß die Trageinrichtung als quer zur Fahrtrichtung liegender, seitlich über die Spur der Hinterräder hinausragender Rahmen ausgebildet ist, der so weit hinter den Hinterrädern angeordnet ist, daß mehrere auf dem Querrahmen angeordnete und von diesem aus in Richtung auf die Hinterradachse vorspringende Reihenernteeinheiten wenigstens mit dem Hauptbereich ihres Bearbeitungsdurchganges hinter einer senkrecht zum Boden verlaufenden, und die Hinterräder tangential berührenden Ebene liegen, und daß die Lage der Reihenernteeinheiten längs des Querrahmens im Bereich zwischen den Hinterrädern und außerhalb dieses Bereiches einstellbar sind. Vorzugsweise ist die Trageinrichtung so weit hinter den Rädern der Hinterradachse des in normaler Fahrtrichtung durch die Reihen fahrenden Ackerschleppers angeordnet, daß die sich von der Trageinrichtung mit ihren Bearbeitungsdurchgängen in Fahrtrichtung nach vorne erstreckenden Reihenernteeinheiten hinter den Laufrädern des Ackerschleppers verblieben. Erst dadurch wird eine freie Querjustierbarkeit jeder einzelnen Reihenernteeinheit unabhängig von der relativen Lage zu den Laufrädern und damit eine leichte und genaue Anpaßbarkeit an variierende Reihenabstände ermöglicht. Auch gewährleistet diese Anordnung eine freie Höheneinstellbarkeit der Reihenernteeinheiten, ohne daß hierfür die gesamte Trageinheit angehoben oder abgesenkt werden muß.

Um die Trageinrichtung der Höhe nach einstellen zu können, ist es vorteilhaft, wenn der die Trageinrichtung bildende Querrahmen an einem Hubraum angeordnet ist, der seinerseits an der Hinterradachse der Antriebseinheit abgestützt ist. Damit läßt sich die Erntemaschine, unabhängig davon, ob die Antriebseinheit eine Dreipunktanhängung oder einen Kraftheber aufweist, an der Antriebseinheit anbringen.

Um eine hohe Stabilität bei der Arbeit durch gute Gewichtsverteilung in bezug auf den Schwerpunkt der Antriebseinheit zu erhalten, ist es vorteilhaft, die Erntegutsammeleinrichtung über der Antriebseinheit mittels aufrechter vorderer und rückwärtiger Stützrahmen anzuordnen, von denen der rückwärtige Stützrahmen an der Hinterradachse befestigt ist, wobei der Hubrahmen an dem rückwärtigen Stützrahmen angelenkt ist und sich von diesem aus nach rückwärts erstreckt. Dies ergibt zugleich eine außerordentlich einfache Montage der gesamten Erntemaschine an der Antriebseinheit, da nur die aufrechten Stützrahmen der Erntegutsammeleinrichtung an der Antriebseinheit befestigt zu werden brauchen, während die Trageinrichtung mit dem Hubrahmen an dem rückwärtigen Stützrahmen angebracht ist. Gleichzeitig gelangt die Erntegutsammeleinrichtung direkt über der Antriebseinheit zu liegen, wobei sie die Last auf den beiden Achsen der Antriebseinheit erhöht und die Stabilität der Antriebseinheit verbessert. Gleichzeitig wird gewährleistet, daß der Blick des Fahrers der Antriebseinheit durch die Erntegutsammeleinrichtung nicht behindert wird.

Der die Trageinrichtung bildende Querrahmen weist zweckmäßigerweise einen aufrechten Tragrahmen auf, der mit in senkrechten Ebenen verschwenkbaren parallelogrammartigen Gestängegliedern des Hubrahmens gelenkig verbunden ist und der zur Fahrtrichtung quer verlaufende Träger zur querjustierbaren Aufnahme der Reihenernteeinheit unterstützt. Der die Trageinrichtung bildende Querrahmen kann so mit den zugehörigen Reihenernteeinheiten durch einfaches Lösen der parallelogrammartigen Gestängeglieder von dem aufrechten Rahmen von der Erntegutsammeleinrichtung und den zugehörigen Trageinrichtungen gelöst und gesondert abgestellt werden. Ebenso einfach gestaltet sich die Wiederanbringung der Trageinrichtung.

Eine günstige Bewegung der Trageinrichtung mit den angebrachten Reihenernteeinheiten während des Anhebens und Senkens mittels der Hubeinrichtung ergibt sich, wenn von den zusammengehörigen parallelogrammartigen Gestängegliedern die oberen Gestängeglieder eine geringere wirksame Länge als die unteren Gestängeglieder aufweisen. Dadurch wird es auch möglich, die Trageinrichtung etwas näher an die Hinterradachse zu bringen und dadurch die Lastverhältnisse noch günstiger zu beeinflussen. Zum Verschwenken der Trageinrichtung sind zweckmäßigerweise zwischen der Hinterradachse der Antriebseinheit bzw. dem rückwärtigen Stützrahmen einerseits und dem Hubrahmen bzw. den parallelogrammartigen Gestängegliedern andererseits hydraulische Schwenkzylinder vorgesehen. Im günstigsten Fall verbleiben die Schwenkzylinder beim Absetzen der Erntemaschine auf dem Boden in der die Erntegutsammeleinrichtung umfassenden Einheit, so daß keine Montageschritte erforderlich sind.

Damit kann der Querrahmen in einer bevorzugten Ausführungsform zusammen mit allen Reihenernteeinheiten als Einbaueinheit leicht lösbar mit dem Hubrahmen verbunden werden, und zwar bevorzugt im Bereich zwischen dem Tragrahmen und den parallelogrammartigen Gestängegliedern.

Üblicherweise ist zwischen den Reihenernteeinheiten und der Erntegutsammeleinrichtung ein kanalartiger Förderweg vorgesehen, durch den das von den Erntegutsammeleinrichtungen gesammelte Erntegut über ein Gebläse in die Erntegutsammeleinrichtung gefördert wird. Bei der neuen Erntemaschine ist es dabei besonders vorteilhaft, wenn der aus Querrahmen und Reihenernteeinheiten bestehenden Anbaueinheit ein unterer lösbarer Abschnitt des Förderweges fest zugeordnet ist, während der restliche obere Abschnitt des Förderweges vorteilhafterweise mit der Erntegutsammeleinrichtung zu einer Anbaueinheit fest verbunden und in der Betriebsstellung teleskopartig verschieblich mit dem unteren Abschnitt des Förderweges verbunden ist. Durch diese Ausbildung läßt sich einmal die Relativbewegung zwischen der Erntegutsammeleinrichtung und den Reihenernteeinheiten bei der Höhenverstellung auf einfache und zuverlässige Weise ausgleichen und außerdem die Montage und das Abmontieren der Erntemaschine wesentlich erleichtern, da für die Herstellung des kanalartigen Förderweges keine besonderen Montageschritte erforderlich sind.

Die Erfindung wird nachfolgend anhand schematischer Zeichnung an einem Ausführungsbeispiel näher erläutert. Es zeigt

Fig. 1 eine Erntemaschine gemäß der Erfindung in perspektivischer Ansicht schräg von hinten,

Fig. 2 eine rückwärtige Ansicht der Erntemaschine nach Fig. 1,

Fig. 3 im Ausschnitt eine perspektivische Ansicht der Reihenernteeinheit mit Blickrichtung schräg von vorne nach hinten und

Fig. 4 eine perspektivische Ansicht der Stützeinrichtungen, des Hubrahmens und eines Teils des Querrahmens für den Querförderer der Erntemaschine nach Fig. 1.

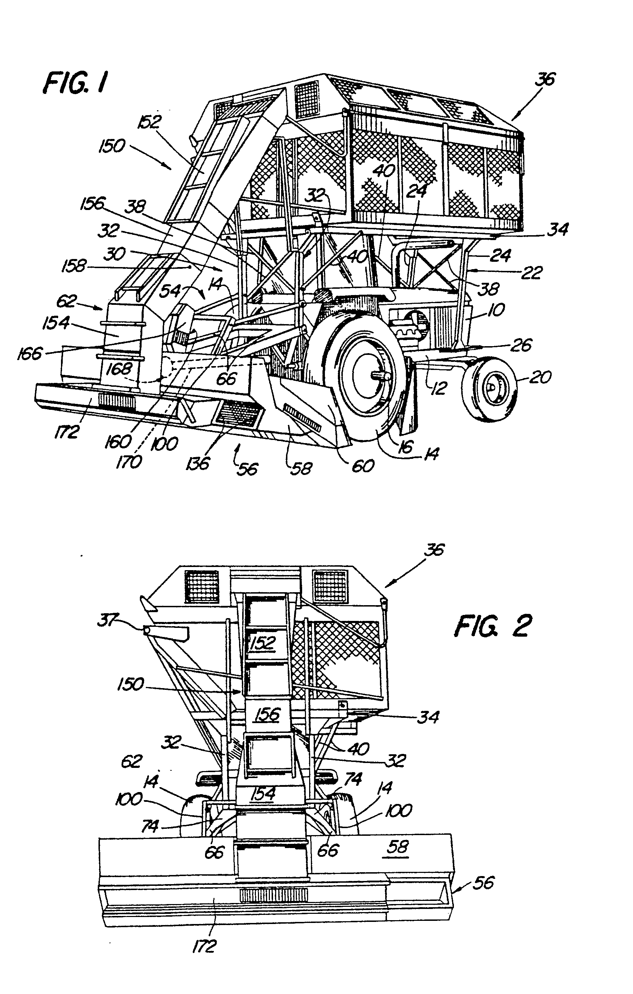

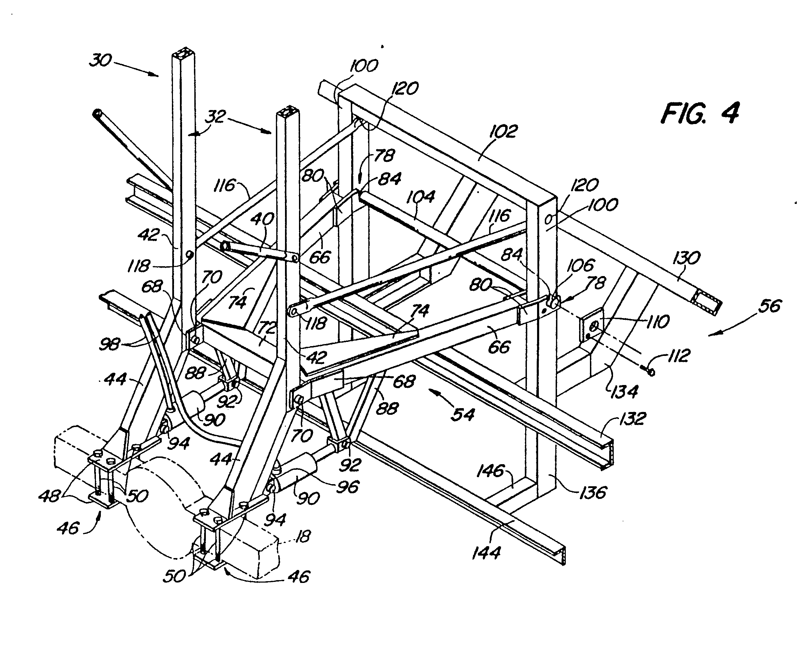

Wie aus den Fig. 1 und 2 hervorgeht, ist eine Antriebseinheit in Form eines Ackerschleppers 10 vorgesehen. Dieser weist einen sich von vorne nach hinten erstreckenden Fahrgestellrahmen 12 auf, der durch rückwärtige Antriebsräder 14 und durch im Querabstand angeordnete vordere Lenkräder 20 unterstützt ist. Die Antriebsräder 14 werden von einer Hinterradachse unterstützt, die sich von einem Achsglied 18 nach Fig. 4 nach außen erstreckt. Die hinteren Antriebsräder 14 und die vorderen Lenkräder 20 sind jeweils im gegenseitigen Abstand angeordnet, so daß sie zwischen den Erntegutreihen laufen, wenn der Ackerschlepper über das Feld fährt.

Eine vordere aufrechte Stützeinrichtung 22 nach Fig. 1 umfaßt zwei aufrechte Ständer 24, deren unteren Enden mit einer Befestigungseinrichtung verbunden sind, die an dem Fahrgestellrahmen 12 des Ackerschleppers 10 festgeschraubt ist. Die Ständer 24 erstrecken sich nach oben bis über die Oberseite des Ackerschleppers 10.

Eine rückwärtige aufrechte Stützeinrichtung 30 umfaßt zwei im Querabstand angeordnete aufrechte Ständer 32, die auf dem Achsglied 18 montiert sind und in oberen Enden auslaufen, die sich im wesentlichen in der gleichen Höhe oberhalb des Ackerschleppers wie die oberen Enden der Ständer 24 befinden. Ein horizontaler Stützrahmen 34 für einen Sammelkorb 36 verbindet die oberen Enden der Ständer 24 und 32 und erstreckt sich im wesentlichen über die ganze Länge des Fahrgestellrahmens 12. Auf dem horizontalen Tragrahmen 34 ist der Sammelkorb 36 oberhalb des Ackerschleppers abgestützt. Er kann um eine sich in Fahrtrichtung erstreckende Achse 37 oberhalb der linken Seite des Ackerschlepperfahrgestellrahmens 12 (Fig. 2) verschwenkt werden.

Versteifungs- oder Querstreben 38 erstrecken sich zwischen den aufrechten Ständern 24 und den Ständern 32, um diese zu stabilisieren und die Gesamtrahmen- oder Stützkonstruktion auszusteifen. Zusätzliche Diagonalstreben 40 sind zwischen den Ständern und dem Tragrahmen 34 angeordnet. Jeder Ständer 32 umfaßt ein senkrechtes hohles Glied 42 nach Fig. 4, dessen unteres Ende mit einem unteren verstärkten Stützglied 44 verbunden ist, das seinerseits mit dem hinteren Achsglied 18 durch eine Halterung 46 verbunden ist. Die Halterung 46 umfaßt zwei allgemein horizontal ausgerichtete Platten 48, die auf entgegengesetzten Seiten des Achsgliedes 18 durch Bolzen 50 gehalten sind. Die versteiften unteren Stützglieder erstrecken sich nach oben und nach rückwärts von dem Achsglied 18 aus zu einer Verbindungsstelle mit dem vertikalen rohrförmigen Glied 42.

Ein Hubrahmen 54 ist mit der hinteren aufrechten Stützeinrichtung 30 für eine im wesentlichen vertikale Bewegung schwenkbar verbunden. Der Hubrahmen 54 erstreckt sich von der Stützeinrichtung 30 nach rückwärts und ist mit einem Querrahmen 56 für einen Querförderer schwenkbar verbunden. Dieser unterstützt wiederum ein Gehäuse 58 für den Querförderer sowie in Querabständen angeordnete Reihenernteeinheiten 60 und ein Erntegutfördersystem 62. Der Hubrahmen 54 umfaßt zwei Hauptträger 66, die nach rückwärts verlaufen und von den aufrechten Ständern aus divergieren. Jeder Hauptträger 66 umfaßt einen vorderen Halter 68, der mit dem entsprechenden Ständer 32 durch Stifte 70 schwenkbar verbunden ist. Ein kanalförmiges Glied 72 erstreckt sich quer zwischen den vorderen Enden der Hauptträger 66 und ist mit diesen verschweißt. Obere und untere Versteifungsplatten oder Knotenbleche 74 sind zwischen den Stützträgern 66 und dem kanalförmigen Glied 72 zur Erhöhung der Festigkeit verschweißt. Jeder Hauptträger 66 endet in einer Halterung 78 für den rückwärtigen Rahmen. Diese Halterung umfaßt zwei Platten 80, die an den Seiten der Stützträger 66 angeschweißt sind. Die Platten 80 umfassen einen nach oben offenen Schlitz 84.

Von jedem Hauptträger 66 des Hubrahmens 54 aus erstreckt sich ein Halter 88 für einen Zylinder. Ein Hubzylinder 90 ist mit dem Stangenende durch Stift 92 mit dem unteren Bereich des Halters 88 verbunden. Das Verankerungsende des Zylinders 90 ist über Stift 94 mit einem Halter 96 verbunden, der an dem unteren Ende des Stützgliedes 44 nahe des Halters 46 verbunden ist. Die Zylinder 90 sind über Schläuche 98 mit einer Quelle für hydraulisches Fluid auf dem Ackerschlepper 10 verbunden und werden ausgefahren und eingezogen als Einheit, um die Hauptträger 66 um die Stifte 70 zu verschwenken und die Rahmenhalter 78 zu heben und zu senken zwischen einer Transportstellung und einer Bearbeitungsstellung.

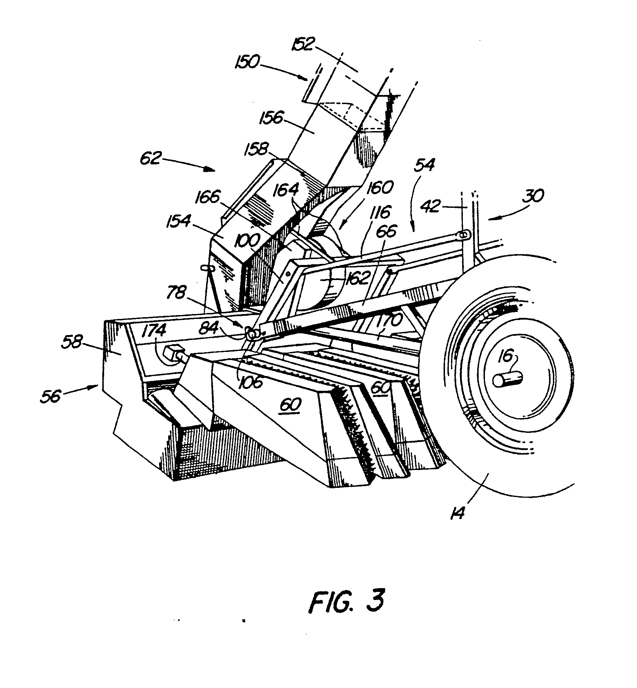

Der Querrahmen 56 umfaßt allgemein aufrechte Ständer 100, die an ihrem oberen Ende in Querrichtung im Abstand durch ein rohrförmiges Glied oder einen Querträger 102 gehalten werden, der an den Ständern festgeschweißt ist und diese nach oben abdeckt. Eine horizontal verlaufende Querstange 104 erstreckt sich zwischen den Ständern 100 und ragt durch die Ständer hindurch und endet in Endabschnitten 106, die außerhalb der Seiten der Ständer liegen. Die Platten 80 jedes Halters 78 erstrecken sich auf entgegengesetzten Seiten der entsprechenden aufrechten Ständer 100. Die im Querschnitt kreisförmige Stange 104 wird in den Schlitzen 84 der Platten aufgenommen. Nachdem der Halter 78 auf dem Ständer angeordnet und so angehoben ist, daß die Endabschnitte 106 der Stange 104 in die Schlitze 84 eintreten, werden mit Öffnungen versehene Stirnplatten 110 über die Endabschnitte 106 der Stange gefädelt und durch Bolzen 112 an den Haltern festgelegt, um zu verhindern, daß die Stange 104 sich gegenüber den Haltern anheben kann. Die Stirnplatten 110 legen somit den Querrahmen 56 an den Hauptträgern 66 des Hubrahmens 54 fest, während sie eine relative Schwenkbewegung zwischen den Ständern 100 und den Hauptträgern 66 ermöglichen. Höhensteuerglieder 116 sind oberhalb der Hauptträger 66 mit den Ständern 32 durch Stifte 118 schwenkbar verbunden. Die Steuerglieder 116 erstrecken sich nach rückwärts und nach außen von der Anlenkstelle mit den Ständern 32 zu rückwärtigen Bereichen, die durch Stifte 120 mit den aufrechten Ständern 100 gerade unterhalb des rohrförmigen Gliedes 102 verbunden sind. Die Höhensteuerglieder 116 zusammen mit den zugehörigen Hauptträgern 66 bilden Teil eines Gestängevierecks, welches den Querrahmen 56 in bezug zur Horizontalen der Lage nach einjustiert, wenn die Zylinder 90 ausgefahren und eingezogen werden, um den Rahmen zu heben und zu senken. In der bevorzugten Ausführungsform, die am besten in den Fig. 1 und 3 zu sehen ist, erstrecken sich die aufrechten Ständer 100 nach vorne und nach oben, und zwar von dem übrigen Teil des Querrahmens 56 aus. Die Höhensteuerungsglieder 116 verhindern, daß die vorderen Bereiche der Reihenernteeinheiten 60 mit den rückwärtigen Laufrädern 14 in Konflikt gelangen, wenn die Hauptträger 66 nach oben geschwenkt werden, um den Querrahmen anzuheben. Die Glieder 116 sind kürzer als die Hauptträger 66, so daß beim Anheben des Hubrahmens 54 der Querrahmen 56 nach vorne rollt (im Uhrzeigersinne in Fig. 1), so daß die vorderen Enden der Einheiten 60 gegenüber dem Rahmen 56 abgesenkt werden. Diese Rollwirkung gestattet es, daß das vordere Ende der Reihenernteeinheiten 60 direkt hinter den Rädern 14 zu liegen kommen, ohne daß ein Kontakt mit den rückwärtigen Bereichen der Räder zu befürchten ist, wenn die Einheiten zusammen mit dem Querrahmen 56 in die Transportstellung gehoben werden. Die Glieder 116 halten auch den Querrahmen in einer vorgewählten Höhe während des Erntevorganges, um die gewünschte Neigung von vorne nach hinten der Reihenernteeinheiten 60 zu erhalten. Der Querrahmen 56 unterstützt im wesentlichen das ganze Gewicht der Reihenernteeinheiten 60 sowohl in der Transportstellung oberhalb des Bodens als auch in der abgesenkten Bearbeitungsstellung.

Der Querrahmen 56 ist von üblicher Konstruktion und umfaßt kanalförmige oder rohrförmige Querträger 130 und 132, die durch von vorne nach hinten verlaufende Rahmenglieder 134 verbunden sind. Allgemein aufrechte Rahmenglieder 136 bilden eine rückwärtige Unterstützung für den Abschnitt des Querförderergehäuses 58 hinter dem nicht gezeigten Querförderer. In der bevorzugten Ausführungsform sind die aufrechten Ständer 100 senkrechte Verlängerungen der zentral angeordneten Rahmenglieder 136. Ein nicht gezeigtes Winkelstück ist an der Vorderseite des Rahmengliedes 132 angeschweißt und geschlitzt, um Verbindungsabschnitte der Reihenernteeinheiten 60 aufzunehmen. Ein Winkeleisen 144 ist an sich nach vorne erstreckenden Rahmengliedern 146 festgeschweißt, welche den Boden unterhalb des Querförderers unterstützen. Das Winkeleisen 144 trägt ein Ende der nicht gezeigten Zylinder, die dazu verwendet werden, um zusammen mit üblichen und automatisch arbeitenden Höhenfühleinrichtungen die einzelnen Reihenernteeinheiten 60 während des Erntevorganges einzeln zu heben und zu senken. Die Einzelheiten dieser Reihenernteeinheiten brauchen hier nicht beschrieben zu werden. Es sollte jedoch bemerkt werden, daß, obwohl der Querrahmen 56 allgemein von üblicher Gestalt ist, die aufrechten Ständer 100 hinzugefügt sind, so daß der Rahmen 56 mit dem Hubrahmen 54 verbunden werden kann. Der gesamte Querrahmen 56 mit den Reihenernteeinheiten 60 kann selektiv von dem Ackerschlepper und den übrigen Teilen der Erntemaschine abgenommen werden, indem die Stifte 120 und die Stirnplatten 110 entfernt und die Hauptträger von der Stellung in Fig. 3 aus abgesenkt werden, so daß der Endbereich 106 der Stange 104 von den Schlitzen 84 in den Haltern 78 freikommt.

Das Erntegutfördersystem 62 umfaßt einen teleskopartigen Förderkanal oder ein Leitgehäuse 150. Dieses weist einen oberen Gehäuseteil 152 auf, das durch den Tragrahmen 34 des Sammelkorbes 36 unterstützt wird. Weiterhin ist ein unterer Gehäuseabschnitt 154 vorgesehen, der auf dem Querrahmen 56 abgestützt ist. Ein Mittelabschnitt 156 ist mit dem unteren Ende des Abschnittes 154 durch Bolzen 158 verbunden, die sich durch entsprechende Seitenwände der Abschnitte erstrecken. Das obere Ende des Mittelabschnittes 156 ist verschiebbar im unteren Ende des Abschnittes 152 aufgenommen. Das bedeutet, daß der untere Gehäuseabschnitt 154 in bezug auf den Abschnitt 152 beim Anheben des Querrahmens 56 und beim Absenken auf und ab bewegt werden kann. Wenn die Bedienungsperson den Querrahmen mit den Reihenernteeinheiten 60 vom Ackerschlepper abnehmen will, braucht sie lediglich die beiden Bolzen 158 zu entfernen, den Mittelabschnitt 156 bis über den unteren Gehäuseabschnitt 154 anzuheben und den Abschnitt zu entfernen. Der Abschnitt 152 verbleibt mit dem Sammelkorb 36 und der Abschnitt 154 verbleibt mit dem Querrahmen. Wenn der Querrahmen 56 mit dem Ackerschlepper verbunden wird, braucht die Bedienungsperson den Vorgang lediglich umzukehren, um einen ununterbrochenen Förderweg zwischen dem Querförderer und dem Sammelkorb 36 herzustellen. Das Gelenkviereck, das teilweise durch die Hauptträger 66 und die Höhensteuerglieder 116 gebildet wird, hält eine ausreichende Fluchtung zwischen dem oberen und unteren Gehäuseabschnitt 152 und 154 aufrecht, um zu verhindern, daß der Zwischenabschnitt 156 in dem unteren Ende des Abschnittes 152 verklemmt.

Das Fördersystem umfaßt außerdem ein Gebläse 160 mit einem Gehäuse 162, das in den unteren Gehäuseabschnitt 154 mündet. Das Gebläsegehäuse 162 ist mit zwei sich in Fahrtrichtung erstreckenden Winkeleisen 164 verbunden. Diese sind mit ihren entgegengesetzten Enden mit dem unteren Gehäuseabschnitt 154 und mit dem rohrförmigen Glied 102 verbunden, so daß das Gebläse 160 in bezug auf den Querrahmen 56 festgelegt ist. Ein üblicher Gebläseriemenantrieb (nicht gezeigt) ist in dem Antriebsgehäuse 166 vorgesehen und durch eine Antriebsriemenscheibe angetrieben, die bei 168 in Fig. 1 gezeigt ist. Diese ist antriebsmäßig mit einer Antriebswelle 170 verbunden, die sich von der Zapfwelle des Ackerschleppers 10 nach hinten erstreckt. Das Gebläse 160 bläst Luft nach oben in den Förderkanal 150, um Erntegut aus dem zentralen Bereich des Querförderers in den unteren Gehäuseabschnitt 150 einzusaugen und das Erntegut nach oben in den Sammelkorb 36 zu blasen. Schwere unreife Klumpen sammeln sich in einem Sammelkasten 172 unter dem Gehäuseabschnitt 154, der durch den Querrahmen 56 unterstützt wird.

In den Reihenernteeinheiten 60 sind die Erntewerkzeuge und Fördereinrichtungen von Antriebswellen 174 aus angetrieben. Diese sind antriebsmäßig mit einem üblichen Riementrieb verbunden (vgl. hierzu die US-A-3 716 976). Das Riemenantriebssystem für die Reihenernteeinheiten ist antriebsmäßig außerdem mit der Zapfwelle des Ackerschleppers über die Antriebswelle 170 und Riemenscheiben 168 verbunden. Es ist ersichtlich, daß andere Arten von Übertragungssystemen in diesem Zusammenhang verwendet werden können, einschl. von Getrieben.

Die Erntemaschine nach Fig. 1 bis 3 umfaßt vier Reihenernteeinheiten 60, die in Querrichtung am Querrahmen 56 in Abständen angeordnet sind. Die äußerste Reihenernteeinheit 60 auf jeder Seite nimmt eine Pflanzenreihe außerhalb und hinter den korrespondierenden rückwärtigen Antriebsrädern 14 des Ackerschleppers auf. Zwei innenliegende Reihenernteeinheiten 60 nehmen die beiden Reihen auf, die zwischen und hinter den Antriebsrädern 14 verlaufen. Alternativ dazu kann jede Anzahl von Pflanzenreihen von 1 bis 3 oder mehr durch Anordnung einer entsprechenden Anzahl von Reihenernteeinheiten 60 an den entsprechenden Stellen entlang des Querrahmens 56 verwirklicht werden. Die rückwärtige Lage des Rahmens 56 und der Reihenernteeinheiten 60 gestattet es, mehr als zwei Einheiten in einfacher und leichter Weise anzubringen und auf verschiedene Reihenabstände ohne Konflikt mit dem Ackerschlepper einzustellen.

## Patentansprüche

1. Erntemaschine zum Ernten von in Reihen stehendem Erntegut, insbesondere Baumwolle, bestehend aus einer selbstfahrenden Antriebseinheit, insbesondere Ackerschlepper (10) mit angetriebenen Hinterrädern (14), der bei seinem Einsatz in normaler Fahrtrichtung entlang der Pflanzenreihen fährt, aus einer hinter der Achse (16, 18) der Hinterräder (14) der Antriebseinheit angeordneten, an der Antriebseinheit lösbar befestigten Trageinrichtung für eine Reihenernteeinheit (60) mit auf die Hinterachse (16, 18) der Antriebseinheit zu gerichtetem Arbeitsdurchgang für die Pflanzen und aus einer in Fahrtrichtung vor der Trageinrichtung angeordneten, an der Antriebseinheit lösbar befestigten Erntegutsammeleinrichtung (36), dadurch gekennzeichnet, daß die Trageinrichtung als quer zur Fahrtrichtung liegender, seitlich über die Spur der Hinterräder (14) hinausragender Rahmen (56) ausgebildet ist, der so weit hinter den Hinterrädern (14) angeordnet ist, daß mehrere auf dem Querrahmen (56) angeordnete und von diesem aus in Richtung auf die Hinterradachse (16, 18) vorspringende Reihenernteeinheiten (60) wenigstens mit dem Hauptbereich ihres Bearbeitungsdurchganges hinter einer senkrecht zum Boden verlaufenden und die Hinterräder (14) tangential berührenden Ebene liegen und daß die Lagen der Reihenernteeinheiten (60) längs des Querrahmens (56) im Bereich zwischen den Hinterrädern und außerhalb dieses Bereichs einstellbar sind.

2. Erntemaschine nach Anspruch 1, dadurch gekennzeichnet, daß der die Trageinrichtung bildende Querrahmen (56) an einem Hubrahmen (54) angeordnet ist, der seinerseits an der Hinterradachse (16, 18) der Antriebseinheit abgestützt ist.

3. Erntemaschine nach Anspruch 2, dadurch gekennzeichnet, daß die Erntegutsammeleinrichtung (36) über der Antriebseinheit mittels aufrechter vorderer und rückwärtiger Stützrahmen (32, 30) angeordnet ist, von denen der rückwärtige Stützrahmen (30) an der Hinterradachse (16, 18) befestigt ist, und daß der Hubrahmen (54) an dem rückwärtigen Stützrahmen (30) angelenkt ist und sich von diesem aus nach rückwärts erstreckt.

4. Erntemaschine nach einem der Ansprüche 2 oder 3, dadurch gekennzeichnet, daß der Querrahmen (56) einen aufrechten Tragrahmen (100, 102, 104) aufweist, der mit in senkrechten Ebenen verschwenkbaren parallelogrammartigen Gestängegliedern (66, 116) des Hubrahmens (54) gelenkig verbunden ist und der zur Fahrtrichtung quer verlaufende Träger (130, 132, 144) zur querjustierbaren Aufnahme der Reihenernteeinheiten (60) unterstützt.

5. Erntemaschine nach Anspruch 4, dadurch gekennzeichnet, daß von den zusammengehörigen parallelogrammartigen Gestängegliedern (66, 116) die oberen Gestängeglieder (116) eine geringere wirksame Länge als die unteren Gestängeglieder aufweisen.

6. Erntemaschine nach einem der Ansprüche 2 oder 3, dadurch gekennzeichnet, daß zwischen der Hinterradachse (16, 18) der Antriebseinheit bzw. dem rückwärtigen Stützrahmen (30) einerseits und dem Hubrahmen (54) bzw. den parallelogrammartigen Gestängegliedern (66, 116) andererseits hydraulische Schwenkzylinder (90) vorgesehen sind.

7. Erntemaschine nach einem oder mehreren der Ansprüche 2 bis 6, dadurch gekennzeichnet, daß der Querrahmen (56) zusammen mit allen Reihenernteeinheiten (60) als Anbaueinheit leicht lösbar mit dem Hubrahmen (54) verbunden ist, insbesondere im Bereich zwischen Tragrahmen (100, 102, 104) und parallelogrammartigen Gestängegliedern (66, 116).

8. Erntemaschine nach Anspruch 7, bei der zwischen Reihenernteeinheiten (60) und Erntegutsammeleinrichtung (36) ein kanalartiger Förderweg (150) für das Erntegut vorgesehen ist, dadurch gekennzeichnet, daß der aus Querrahmen (56) und Reihenernteeinheiten (60) bestehenden Anbaueinheit ein unterer lösbarer Abschnitt (154) des Förderweges (150) fest zugeordnet ist.

9. Erntemaschine nach Anspruch 8, dadurch gekennzeichnet, daß der restliche obere Abschnitt (152) des Förderweges (150) mit der Erntegutsammeleinrichtung (36) zu einer Anbaueinheit fest verbunden und in der Betriebsstellung teleskopartig verschieblich mit dem unteren Abschnitt (154) des Förderweges (150) verbunden ist.

**Claims**

1. A harvester for harvesting crop material in rows, in particular cotton, comprising a self-propelled drive unit, in particular an agricultural tractor (10) with driven rear wheels (14), which, upon use thereof in the normal direction of travel, moves along the rows of plants, a carrier means which is arranged rearwardly of the axle (16, 18) of the rear wheels (14) of the drive unit and which is releasably secured to the drive unit, for carrying a row harvesting unit (60) with an operating passage therethrough for the plants, said passage being directed towards the rear axle (16, 18) of the drive unit, and a crop material collecting means (36) which is arranged in front of the carrier means in the direction of travel and which is releasably secured to the drive unit, characterised in that the carrier means is in the form of a frame (56) which is disposed transversely with respect to the direction of travel and which projects laterally beyond the track of the rear wheels (14) and which is arranged rearwardly of the rear wheels (14) at such a distance that a plurality of row harvesting units (60) which are disposed on the transverse frame (56) and which project therefrom towards the rear wheel axle (16, 18) are disposed with at least the main region of their operating passage rearwardly of a plane which extends normal to the ground and which tangentially touches the rear wheels (14), and that the positions of the row harvesting units (60) along the transverse frame (56) are displaceable in the region between the rear wheels and outside said region.

2. A harvester according to claim 1 characterised in that the transverse frame (56) forming the carrier means is arranged on a lifting frame (54) which in turn is supported on the rear wheel axle (16, 18) of the drive unit.

3. A harvester according to claim 2 characterised in the that the crop collecting means (36) is disposed above the drive unit by means of upright front and rear support frames (32, 30), of which the rearward support frame (30) is secured to the rear wheel axle (16, 18), and that the lifting frame (54) is pivotally connected to the rearward support frame (30) and extends rearwardly therefrom.

4. A harvester according to one of claims 2 or 3 characterised in that the transverse frame (56) has an upright carrier frame (100, 102, 104) which is pivotally connected to parallelogram-like linkage members (66, 116) of the lifting frame (54), which are pivotable in perpendicular planes, and which supports bearers (130, 132, 144) which extend transversely with respect to the direction of travel for transversely adjustably accommodating the row harvesting units (60).

5. A harvester according to claim 4 characterised in that of the associated parallelogram-like linkage members (66, 116), the upper linkage members (116) have a shorter operative length than the lower linkage members.

6. A harvester according to one of claims 2 or 3 characterised in that hydraulic pivoting cylinders (90) are provided between the rear wheel axle (16, 18) of the drive unit and the rearward support frame (30) on the one hand, and the lifting frame (54) and the parallelogram-like linkage members (66, 116) on the other hand.

7. A harvester according to one or more of claims 2 to 6 characterised in that the transverse frame (56), together with all row harvesting units (60) is easily releasably connected in the form of an attachment unit to the lifting frame (54), in particular in the region between the carrier frame (100, 102, 104) and the parallelogram-like linkage members (66, 116).

8. A harvester according to claim 7 wherein a channel-like conveyor path (150) for the crop material is provided between row harvesting units (60) and crop collecting means (36), characterised in that a lower releasable portion (154) of the conveyor path (150) is fixedly associated with the attachment unit comprising the transverse frame (56) and row harvesting units (60).

9. A harvester according to claim 8 characterised in that the remaining upper portion (152) of the conveyor path (150) is fixedly connected to the crop collecting means (36) to form an attachment unit and in the operative position is telescopically displaceably connected to the lower portion (154) of the conveyor path (150).


**Revendications**

1. Machine de récolte pour la récolte de cultures en lignes, en particulier du coton, constituée par un engin d'entraînement ou engin porteur automoteur, en particulier un tracteur agricole (10) équipé de roues arrière motrices (14), qui se déplace lors du travail dans le sens de marche normal le long de rangs de plants, une structure de support disposée derrière l'essieu (16, 18) des roues arrière (14) de l'engin d'entraînement, et fixée amoviblement à celui-ci, cette structure étant destinée à un bec ou dispositif de récolte de rang (60) muni d'un passage de traitement destiné aux plants, orienté vers l'essieu arrière (16, 18) de l'engin d'entraînement, et un dispositif collecteur de produits de récolte (36) disposé dans le sens de la marche en avant de la structure de support et fixé amoviblement sur l'engin d'entraînement, caractérisée en ce que la structure de support est constituée par un châssis (56) disposé transversalement au sens de la marche, faisant saillie latéralement au-delà de la voie des roues arrière (14) et qui est disposé à une distance telle, en arrière des roues arrière (14), que plusieurs becs de récolte de rangs (60) disposés sur le châssis transversal (56) et faisant saillie à partir de celui-ci en direction de l'essieu arrière (16, 18) se trouvent, au moins par la partie principale de leur passage de traitement, derrière un plan s'étendant perpendiculairement au sol et tangentiel aux roues arrière (14), et en ce que les positions des becs de récolte de rangs (60) le long du châssis transversal (56) sont réglables dans la zone située entre les roues arrière et à l'extérieur de cette zone.

2. Machine de récolte suivant la revendication 1, caractérisée en ce que le châssis transversal (56) formant la structure de support est disposé sur un châssis de relevage (54) qui, de son côté, prend appui sur l'essieu arrière (16, 18) de l'engin d'entraînement.

3. Machine de récolte suivant la revendication 2, caractérisée en ce que le dispositif collecteur de produits de récolte (36) est monté au-dessus de l'engin d'entraînement par l'intermédiaire de bâtis d'appui avant et arrière verticaux (22, 30) parmi lesquels le bâti d'appui arrière (30) est fixé sur l'essieu arrière (16, 18), et en ce que le châssis de relevage (54) est articulé sur le bâti d'appui arrière (30) et s'étend vers l'arrière à partir de celui-ci.

4. Machine de récolte suivant la revendication 2 ou 3, caractérisée en ce que le châssis transversal (56) comporte un bâti de support vertical (100, 102, 104) qui est relié à articulation à des membrures (66, 116) en forme de parallélogramme du châssis de relevage (54), pouvant pivoter dans le plan vertical et qui soutient des organes de support (130, 132, 144) s'étendant transversalement au sens de la marche pour le montage d'une manière permettant un réglage transversal des becs ou dispositifs de récolte de rangs (60).

5. Machine de récolte suivant la revendication 4, caractérisée en ce que, parmi les membrures en forme de parallélogramme conjuguées (66, 116), les membrures supérieures (116) ont une longueur efficace plus faible que celle des membrures inférieures.

6. Machine de récolte suivant la revendication 2 ou 3, caractérisée en ce que des vérins de pivotement hydrauliques (90) sont prévus entre l'essieu arrière (16, 18) de l'engin d'entraînement ou le bâti d'appui arrière (30), d'une part, et le châssis de relevage (54) ou les membrures en forme de parallélogramme (66, 116), d'autre part.

7. Machine de récolte suivant l'une quelconque des revendications 2 à 6, caractérisée en ce que le châssis transversal (56) est, avec tous les becs ou dispositifs de récolte de rangs (60), relié d'une façon aisément amovible, à la manière d'un ensemble unitaire rapporté, au châssis de relevage (54), en particulier dans la zone située entre le bâti de support (100, 102, 104) et les membrures en forme de parallélogramme (66, 116).

8. Machine de récolte suivant la revendication 7, dans laquelle il est prévu, entre les becs ou dispositifs de récolte de rangs (60) et le dispositif collecteur de produits de récolte (36), un trajet de transport en forme de conduit ou gaine (150) pour les produits de récolte, caractérisé en ce qu'une section inférieure amovible (154) du trajet de transport (150) est reliée rigidement à l'ensemble unitaire rapporté constitué par le châssis transversal (56) et les becs ou dispositifs de récolte de rangs (60).

9. Machine de récolte suivant la revendication 8, caractérisée en ce que la section supérieure restante (152) du trajet de transport (150) est reliée rigidement au dispositif collecteur de produits de récolte (36) pour former un ensemble unitaire raporté et est reliée, dans la condition de travail, à la section inférieure (154) du trajet de transport (150) de manière à pouvoir coulisser télescopiquement avec celle-ci.

FIG. 1

FIG. 2

FIG. 3

FIG. 4